# EUROPÄISCHE PATENTSCHRIFT

(11) **EP 1 844 979 B1**
(45) Veröffentlichungstag und Bekanntmachung des Hinweises auf die Patenterteilung: **29.10.2014**
(21) Anmeldenummer: 07106062.8
(22) Anmeldetag: 12.04.2007
(51) Int. Cl.: B60N 2/52

(54) **Fahrzeugsitz mit einem höhenverstellbaren Sitzgestell**
Vehicle seat with a height-adjustable seating frame
Siège de véhicule réglable en hauteur

(30) Priorität: 15.04.2006 DE 102006017774
(43) Veröffentlichungstag der Anmeldung: 17.10.2007
(73) Patentinhaber: GRAMMER AG, 92224 Amberg (DE)
(72) Erfinder: Deml, Johann, 92554, Thanstein (DE)
(74) Vertreter: Hannke, Christian

(56) Entgegenhaltungen:
- DE-A1- 3 333 604
- DE-C1- 4 335 199
- KR-A- 20020 090 377
- US-A- 4 484 723

## Beschreibung

Die Erfindung betrifft einen Fahrzeugsitz mit einem höhenverstellbaren Sitzgestell, das zumindest zwei relativ zueinander bewegliche Sitzgestellteile und zumindest eine zwischen den Sitzgestellteilen zur Höhenverstellung angeordnete Gasfeder aufweist, mit zumindest einer zur Beeinflussung der Gasfeder vorgesehenen Steuereinrichtung, die zumindest eine an einem ersten Sitzgestellteil angebrachte Ventileinrichtung mit Steuerventilen zur Ansteuerung von Gasströmen für die Gasfeder sowie eine an einem zweiten Sitzgestellteil vorgesehene Steuerkulisse zur Ansteuerung der Steuerventile aufweist, so dass unabhängig von einer Gewichtsbelastung auf den Fahrzeugsitz eine vorgebbare Höhe des Fahrzeugsitzes gewährleistet ist, wobei die Steuerkulisse mittels einer Einstelleinrichtung unabhängig von einer relativen Stellung der Sitzgestellteile derart relativbeweglich zum zweiten Sitzgestellteil einstellbar ist, dass eine von der Einstelleinrichtung bewirkte Bewegung der Steuerkulisse relativ zum zweiten Sitzgestellteil eine Höhenverstellung des Fahrzeugsitzes bewirkt.

Aus der DE 43 35 199 C1 ist es bekannt, einen abgefederten Fahrzeugsitz mit einem Scherengestell bereitzustellen, das um eine gemeinsame Scherenachse schwenkbare Scherenelemente aufweist. Zum Verstellen des Scherengestells ist eine Gasfeder vorgesehen, mit der eine erste Ventileinrichtung zur Höheneinstellung des Fahrersitzes und über eine Kupplung eine zweite Ventileinrichtung zur gewichtsabhängigen Einstellung der Höhe des Fahrersitzes verbindbar ist. Die Kupplung weist ein um die Scherenachse schwenkbares Segmentelement mit einem bogenförmigen Zahnabschnitt und einen Schwenkarm mit einer mit dem Zahnabschnitt kämmend in Eingriff bringbaren Zahnung auf. Der Schwenkarm ist mit einem der Scherenelemente verbunden und mittels einer Antriebseinrichtung betätigbar, die mit der ersten Ventileinrichtung verbunden ist. An der Scherenachse ist außerdem ein Kulissenelement schwenkbeweglich angeordnet, das zur Betätigung der zweiten Ventileinrichtung dient und relativ zum Segmentelement begrenzt beweglich ist.

KR 2002 0090377 A zeigt eine Vorrichtung zum Betätigen einer Höhenverstellung eines Sitzgestelles. Hierbei wird angenommen, dass über ein Element auf hydraulische oder pneumatische Weise die Auslenkung eines Kolbens gesteuert wird. Durch die Auslenkung dieses Kolbens wird ein Auslenkelement um den Aufnahmepunkt gedreht, welcher an einem Verbindungselement zwischen den Enden zweier Scherenarme angeordnet ist. Über dem Auslenkelement ist ein Plattenelement in dem Aufnahmepunkt gelagert. Durch die in verschiedenen Höhen angebrachten Plattensegmente erfolgt eine Betätigung der Ventileinheit, hierzu wird ein Kontakt zwischen einem Teil der Zapfen und einem Teil der Plattensegmente erzeugt. Die Ventileinheit ist an einer Trägerplatte befestigt, die zum einen auch in dem Aufnahmepunkt gelagert ist und zum anderen eine bogenförmige Öffnung aufweist, in der ein Zapfen gleitend angeordnet ist.

US 4 484 723 A zeigt einen luftgefederten Fahrzeugsitz mit einer Steuerkulisse, die in horizontaler Lage unter dem Fahrzeugsitz angebracht ist. Diese Steuerkulisse ist zweiteilig ausgebildet, wobei beide Teile relativ zueinander bewegbar sind, da beide Teile an einer Achse gelagert sind. Die vertikale Sitzbewegung wird über einen Stift, der einen Kontrollschlitz abfährt, erhalten.

DE 33 33 604 A1 offenbart einen luftgefederten, schwingungsfähig abgestützten Fahrzeugsitz, bei dem ein Sitzrahmen mittels an ihm angeordneten Lenkern unter Zwischenschaltung einer Luftfeder an einem Bodenrahmen abgestützt ist. Eine Steuerscheibe und eine koaxial mit der Steuerscheibe auf dem Zentralbolzen gelagerte in ihrem Umfang etwas kleinere Scheibe sind ebenso gezeigt. Wie aus dieser Druckschrift hervorgeht, ist der Zentralbolzen in seiner Orientierung vertikal.

Die oben genannten Druckschriften haben gemeinsam, dass sie in horizontaler Richtung sehr viel Raum benötigen und daher Gegenstände, wie beispielsweise ein Warndreieck, einen Wagenheber, ein Werkzeugsetz, einen Feuerlöscher oder einen CD-Wechsler nicht unter der Oberseite des jeweiligen Sitzgestellrahmens angeordnet werden können und somit auch nicht direkt mit dem Fahrzeugsitz in einem Fahrzeug eingebaut werden können.

US 4 946 145 A offenbart eine Vorrichtung zur gewichtsabhängigen Niveaueinstellung nach dem Oberbegriff des Anspruchs 1.

Bei einer Relativbewegung der Scherengestelle zueinander erfolgt ebenfalls eine Rotation der Platte um den Zapfen. Die Platte wird über einen Zapfen und eine der Schrauben mitgenommen, wodurch ein Abgleiten der Platte an den Steuerzapfen bewirkt wird.

WO 00/58125 offenbart eine Einrichtung, die bei Fahrzeugsitzen Anwendung findet, die mit Scherengestellen ausgestattet sind. Gemäß dem Gegenstand dieser Druckschrift ist eine Ventileinrichtung auf einer Mittelachse eines Scherengestelles angeordnet und eine gegenüber dieser Ventileinrichtung bewegbare Betätigungseinrichtung ist an einem weiteren Gestellteil bzw. Scherenlenker beweglich angeordnet.

Die Aufgabe der Erfindung besteht darin, eine vereinfachte Höhenverstellung und eine vereinfachte gewichtsunabhängige Niveauregulierung für einen Fahrzeugsitz bereitzustellen.

Diese Aufgabe wird durch einen Fahrzeugsitz der eingangs genannten Art gelöst, bei dem die Einstelleinrichtung einen Seilzug aufweist, und die Steuerkulisse zumindest eine zumindest abschnittsweise umlaufende Abwälzfläche für den Seilzug aufweist. Damit kann in einfacher Weise eine Höhenverstellung des Fahrzeugsitzes verwirklicht werden. Die Steuerkulisse kann mit Hilfe der Einstelleinrichtung, insbesondere mit einem Betätigungshebel, von einem Benutzer des Fahrzeugsitzes relativ in ihrer Position gegenüber dem zweiten Sitzgestellteil derart verändert werden, dass dadurch eine Ansteuerung der Ventileinrichtung bewirkt wird, die eine der Positionsänderung der Steuerkulisse entsprechende Höhenverstellung, die als Absenkung oder als Erhöhung des Fahrzeugsitzes auftreten kann, bewirkt. Sobald die neue Höhe des Fahrzeugsitzes von der Gasfeder eingestellt wurde, wirkt die Steuereinrichtung wieder nur als Niveauregulierung, um eine gewichtsunabhängige Höheneinstellung des Fahrzeugsitzes zu gewährleisten. Bei der Positionsänderung der Steuerkulisse, die durch die Einstelleinrichtung bewirkt werden kann, handelt es sich aus Sicht der Ventileinrichtung um nichts anderes als um eine Abweichung von einer Neutralstellung, die in gleicher Weise auch durch eine Änderung eines Gewichtseinflusses auf den Fahrzeugsitz hervorgerufen werden könnte. Durch die Nutzung der gleichen Vorrichtungen und der gleichen Wirkmechanismen für die Höhenverstellung und der Niveauregulierung lässt sich eine kostengünstige herzustellende Höhenverstellung für den Fahrzeugsitz verwirklichen.

In weiterer Ausgestaltung der Erfindung ist vorgesehen, dass die Steuerkulisse mit einer Energiespeichereinrichtung gegen eine Betätigungskraft der Einstelleinrichtung vorgespannt ist. Durch die Energiespeichereinrichtung, die insbesondere als Torsionsfeder ausgeführt werden kann, ist gewährleistet, dass eine besonders einfache Ansteuerung der Steuerkulisse mit einem biegbaren, flexiblen Zugseil verwirklicht werden kann, das nahezu frei an dem Fahrzeugsitz bis zu einem Betätigungshebel verlegt werden kann. Da mit einem solchen Zugseil typischerweise nur Zugkräfte auf die Steuerkulisse übertragen werden können, ist eine Rückstelleinrichtung in Form eines Energiespeichers vorteilhaft, der die bei einer Stellbewegung für die Steuerkulisse eingeleitete Betätigungsenergie speichert und bei einer entgegengesetzt gerichteten Stellbewegung wieder freigeben kann.

In Ausgestaltung der Erfindung ist vorgesehen, dass die Steuerkulisse drehbar an dem Sitzgestellteil angelenkt ist und zumindest abschnittsweise als Kurvenscheibe mit zumindest zwei vorzugsweise parallel umlaufend angeordneten Steuerbahnen ausgeführt ist. Bei einer Höhenverstellung des Fahrzeugsitzes findet typischerweise eine Relativbewegung, insbesondere eine Schwenkbewegung, zweier relativ zueinander beweglicher Sitzgestellteile statt, die beispielsweise in der Art einer Parallelogrammführung oder in der Art eines Scherengestells ausgeführt sein können. Damit ist es vorteilhaft, die für den Fahrzeugsitz vorzusehende Steuerkulisse auf die stattfindende Schwenkbewegung abzustimmen, was vorzugsweise durch eine Gestaltung als Kurvenscheibe, also mit einer zumindest abschnittsweise kreissegmentförmigen Aussenkontur, gewährleistet werden kann. Um die gewünschte Höheneinstellung des Fahrzeugsitzes vorzunehmen, bedient man sich ebenfalls der Kurvenscheibe, die zu diesem Zweck relativ zu den Sitzgestellteilen verschwenkt wird, um gegenüber der Ventileinrichtung eine Abweichung von einer Neutralstellung zu verwirklichen und damit eine Ansteuerung der Ventileinrichtung zu bewirken, die dann einen entsprechenden Druckluftstrom zu der oder von der Gasfeder bewirken kann. Die Kurvenscheibe weist zumindest zwei parallel zueinander angeordnete, zumindest teilweise, insbesondere konzentrisch um eine vorzugsweise gemeinsame Schwenkachse umlaufende Steuerbahnen auf, die für eine Ansteuerung der Ventileinrichtung in der Art von Steuernocken vorgesehen sind und die bei geeigneter Gestaltung dadurch sowohl die Höhenverstellung des Fahrzeugsitzes als auch die gewichtsunabhängige Niveauregulierung des Fahrzeugsitzes gewährleisten können.

In weiterer Ausgestaltung der Erfindung ist vorgesehen, dass die Ventileinrichtung zwei, insbesondere mit Schlepphebeln versehene, Steuerventile aufweist, die von den parallel umlaufenden Steuerbahnen ansteuerbar sind. Damit kann in einfacher Weise die Doppelfunktion der Kurvenscheibe verwirklicht werden, da die gleichen Steuerbahnen unabhängig von der jeweils momentan zu erfüllenden Aufgabe, also der Höhenverstellung oder der gewichtsunabhängigen Niveauregulierung, für eine Druckbeaufschlagung oder eine Entlüftung der Gasfeder benutzt werden. Ein erstes Steuerventil ist für die Sperrung oder Freigabe eines von einer Druckquelle, insbesondere einem Kompressor, zur Verfügung gestellten Druckluftstroms vorgesehen. Ein zweites Steuerventil ist für die Entlüftung der Gasfeder vorgesehen und ermöglicht damit eine Absenkung des Fahrzeugsitzes.

In weiterer Ausgestaltung der Erfindung ist vorgesehen, dass die Steuerbahnen der Steuerkulisse als bogenförmige Umfangsabschnitte mit abschnittsweise unterschiedlichen Radien ausgeführt sind. Durch die Gestaltung als Kreisbogenabschnitte, die vorzugsweise konzentrisch zu einer Schwenkachse der Steuerkulisse ausgerichtet sind, kann ein eindeutiger Steuerzustand für das jeweilige Steuerventil gewährleistet werden, das entweder vollständig geschlossen oder vollständig geöffnet ist. Ein Übergang zwischen zwei Kreisbogenabschnitten einer Steuerbahn erfolgt vorzugsweise mit einer auf die Geometrie der Schlepphebel angepassten Rampe in einem möglichst geringen Winkelausschnitt zwischen den Kreisbogenabschnitten, um ein schnelles Ansprechverhalten der Steuerventile zu gewährleisten.

In weiterer Ausgestaltung der Erfindung ist vorgesehen, dass die Steuerbahnen der Steuerkulisse zumindest abschnittsweise einen im Wesentlichen gleichen Radius aufweisen. Dies ermöglicht einen symmetrischen Aufbau der Ventileinrichtung und gewährleistet ein im Wesentlichen gleichartiges Ansprechen der beiden Steuerventile, die den parallelen Steuerbahnen zugeordnet sind. Bei einer besonders vorteilhaften Ausführungsform der Erfindung ist vorgesehen, dass die Steuerbahnen in einem gemeinsamen Winkelabschnitt einen im Wesentlichen gleichen, größeren Radius aufweisen und mit voneinander abgewandten Rampen in unterschiedlichen Umfangsrichtungen auf einen im Wesentlichen kleineren Radius übergehen. Der Winkelbereich, in dem beide Steuerbahnen den gleichen Radius aufweisen, entspricht der Neutralstellung, in der beide Steuerventile geschlossen sind und kein Druckluftstrom zu der oder von der Gasfeder gegeben ist. Bei einer Schwenkauslenkung der Kurvenscheibe aus dieser Neutralstellung relativ zur Ventileinrichtung wird unabhängig davon, ob eine Stellung der Steuerkulisse relativ zum Sitzgestellteil verändert wurde oder ob die Sitzgestellteile durch eine Gewichtsänderung relativ zueinander bewegt wurden, wird ein Schlepphebel eines Steuerventils entlang der Rampe auf den größeren Radius geführt, wodurch eine Auslenkung des Schlepphebels und eine Ansteuerung des entsprechenden Steuerventils stattfindet, die ihrerseits zur Beeinflussung eines Druckluftstroms von der oder zu der Gasfeder führt.

Nach der Erfindung ist vorgesehen, dass die Steuerkulisse zumindest abschnittsweise eine umlaufende Abwälzfläche für das als Seilzug ausgeführte Einstellmittel aufweist. Eine Abwälzfläche, die insbesondere konzentrisch oder exzentrisch zu einer Schwenkachse der Steuerkulisse bzw. der Kurvenscheibe ausgerichtet sein kann, ermöglicht eine lineare oder nichtlineare Bewegungsumsetzung einer Zugmittelbewegung. Bei einer konzentrisch ausgerichteten Abwälzfläche wird eine Zugmittelbewegung linear und proportional in einen korrespondierenden Schwenkwinkel der Steuerkulisse umgesetzt. Bei einer exzentrischen Abwälzfläche liegt eine nichtlineare Beziehung zwischen einer Bewegung des Zugmittels und einem Schwenkwinkel der Steuerkulisse vor, wodurch eine Anpassung auf spezielle Erfordernisse der Steuerkulisse, insbesondere im Hinblick auf ein Ansprechverhalten der Ventileinrichtung, verwirklicht werden kann.

In weiterer Ausgestaltung der Erfindung ist vorgesehen, dass die Steuerkulisse drehbar auf einer Mittelachse eines Scherengestells angeordnet ist. Ein Scherengestell ermöglicht eine kompakte und robuste Konstruktion eines höhenverstellbaren Fahrzeugsitzes. Die Anordnung der Steuerkulisse auf der Mittelachse des Scherengestells und die Zuordnung der Ventileinrichtung an zumindest einem Scherenarm des Scherengestells ermöglicht eine besonders kompakte Anordnung der Steuereinrichtung für die Höhenverstellung und Niveauregulierung des Fahrzeugsitzes.

In weiterer Ausgestaltung der Erfindung ist vorgesehen, dass der Ventileinrichtung ein Sperrventil zur Freigabe oder Sperrung einer kommunizierenden Verbindung zwischen der Gasfeder und den Steuerventilen zugeordnet ist. Mit Hilfe des Sperrventils kann ein Druckluftstrom von der oder zu der Gasfeder freigegeben oder gesperrt werden. Dabei kann in der Freigabestellung eine selbsttätige Niveauregulierung stattfinden, während in der Sperrstellung keine Höhenverstellung oder Niveauregulierung vorgesehen ist und die Gasfeder als geschlossenes Federungssystem mit Gaspolster wirkt. Typischerweise wird das Sperrventil in die Sperrstellung gebracht, wenn der Benutzer das Schwingverhalten des Fahrzeugsitzes reduzieren will, beispielsweise wenn sich ein mit einem derartigen Fahrzeugsitz ausgerüstetes Kraftfahrzeug auf einem unebenen, insbesondere Schlaglöcher aufweisenden Untergrund, beispielsweise auf einem Feldweg, Acker oder in einem Baustellenbereich bewegt, wo die Federungseigenschaften des Fahrzeugsitzes vorteilhaft eingesetzt werden können.

In weiterer Ausgestaltung der Erfindung ist vorgesehen, dass das Sperrventil eine zusätzliche Entlüftungsstellung für eine rasche Entlüftung der Gasfeder aufweist, die für eine schnelle Absenkung des Fahrzeugsitzes vorgesehen ist. Damit kann beim Einsteigen oder beim Aussteigen eines Benutzers in ein mit dem höhenverstellbaren Fahrzeugsitz ausgerüstetes Kraftfahrzeug eine besonders bequem zu erreichende oder zu verlassende, niedrige Höheneinstellung des Fahrzeugsitzes rasch eingenommen werden. In der Entlüftungsstellung wird die Entlüftung der Gasfeder nicht durch eine Drossel verlangsamt, wie sie bei einem der Steuerventile vorgesehen sein kann. Vielmehr wird die Entlüftungsgeschwindigkeit für die Gasfeder in der Entlüftungsstellung des Sperrventils lediglich durch die Querschnitte der Druckluftleitung zwischen Gasfeder und Sperrventil sowie durch den Querschnitt des im Sperrventil vorgesehenen Entlüftungskanals begrenzt.

In weiterer Ausgestaltung der Erfindung ist vorgesehen, dass die Steuerkulisse für eine Ansteuerung eines einstellbaren Bewegungsanschlags gestaltet ist, der für eine Begrenzung einer Schwingungsamplitude des Fahrzeugsitzes, insbesondere in Wirkverbindung mit zumindest einem der Scherenarme, vorgesehen ist. Mit einer von der Höheneinstellung des Fahrzeugsitzes abhängigen Stellung eines Bewegungsanschlags kann verhindert werden, dass der Fahrzeugsitz insbesondere in besonders hohen Stellungen eine Schwingung mit einer für den Benutzer unangenehm großen Schwingungsamplitude durchführen kann. Vielmehr wird durch den in Abhängigkeit von der Stellung der Steuerkulisse verstellbaren Bewegungsanschlag eine vorzugsweise über den gesamten Verstellbereich des Fahrzeugsitzes im Wesentlichen gleiche Schwingungsamplitude verwirklicht. Zu diesem Zweck kann die Steuerkulisse mit Übertragungsmitteln, insbesondere mit einer Verzahnung, versehen sein, die eine Übertragung der Schwenkbewegung auf den einstellbaren Bewegungsanschlag ermöglicht.

Weitere Vorteile und Merkmale ergeben sich aus den Ansprüchen sowie aus der nachfolgenden Beschreibung eines bevorzugten Ausführungsbeispiels, das anhand der schematischen Zeichnungen dargestellt ist. Dabei zeigt:
- Fig. 1: eine Seitenansicht eines Fahrzeugsitzes mit einem höhenverstellbaren Sitzgestell;
- Fig. 2: eine perspektivische Darstellung des Sitzgestells gemäß der Fig. 1;
- Fig. 3: eine perspektivische Darstellung einer zur Höhenverstellung vorgesehenen Baugruppe des Sitzgestells gemäß der Fig. 1 und 2;
- Fig. 4: eine teilweise geschnittene Darstellung der Baugruppe gemäß der Fig. 3 mit einer Höhenverstelleinrichtung;
- Fig. 5: eine perspektivische Darstellung der Höhenverstelleinrichtung gemäß der Fig. 4;
- Fig. 6: die Höhenverstelleinrichtung gemäß der Fig. 5 in einer ersten Steuerstellung;
- Fig. 7: die Höhenverstelleinrichtung gemäß der Fig. 5 in einer zweiten Steuerstellung; und
- Fig. 8: die Höhenverstelleinrichtung gemäß der Fig. 5 in einer dritten Steuerstellung.

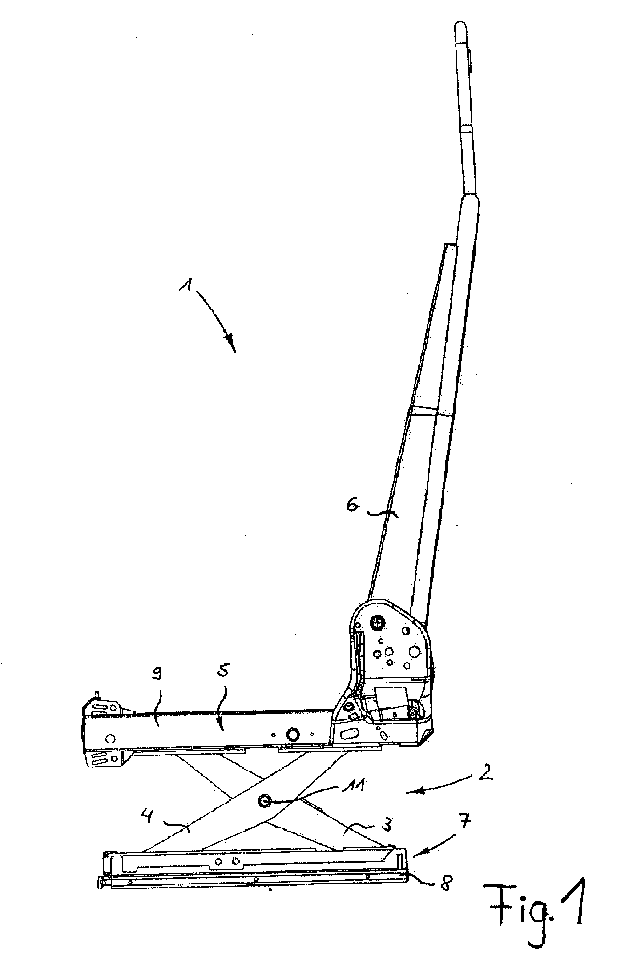

Ein in der Fig. 1 dargestellter Fahrzeugsitz 1 weist ein als Scherengestell 2 ausgeführtes, höhenverstellbares Sitzgestell für eine Höhenverstellung in vertikaler Richtung, also in der Darstellungsebene der Fig. 1 nach oben oder unten, mit einer Sitzfläche 5 und einer Rückenlehne 6 auf, wobei das Scherengestell 2 für eine Längsverstellung, also in der Darstellungsebene nach links oder rechts, an Gleitschienen 8 aufgenommen ist.

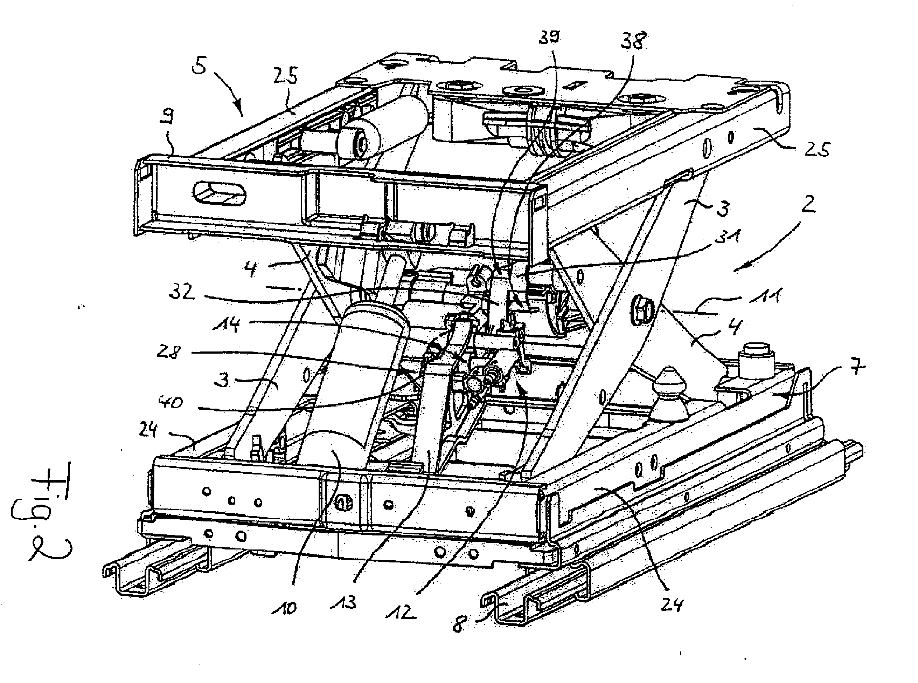

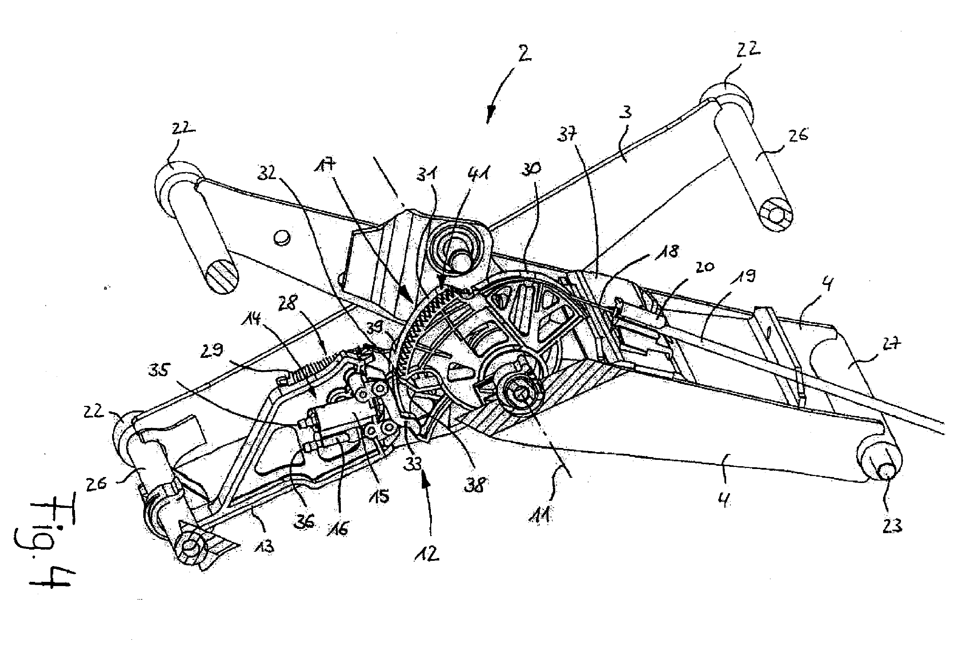

In den Fig. 2 bis 4 ist der Aufbau des Scherengestells 2 näher dargestellt. Das Scherengestell 2 wird aus je zwei paarweise parallel zueinander ausgerichteten Scherenarmen 3, 4 gebildet, die jeweils beabstandet zueinander angeordnet sind und die mittels einer Scherenachse 11 schwenkbeweglich miteinander verbunden sind. Dabei sind an ersten Scherenarmen 3, die erste Sitzgestellteile bilden, jeweils endseitig an Verbindungsstangen 26 angebrachte, drehbewegliche Laufrollen 22 vorgesehen. An zweiten Scherenarmen 4, die zweite Sitzgestellteile bilden, sind an ersten endseitigen Bereichen nach außen abragende Scharnierzapfen 23 für eine schwenkbewegliche, ortsfeste Scharnierverbindung mit einem verschiebbar in den Gleitschienen 8 aufgenommenen Grundrahmen 7 vorgesehen. An zweiten endseitigen Bereichen der zweiten Scherenarme 4 sind an einer Verbindungsstange 27 angebrachte Laufrollen 22 vorgesehen, die eine translatorische Bewegung auch unter größerer Last, also beispielsweise unter dem Gewicht eines Benutzers des Fahrzeugsitzes 1, in den U-förmig profilierten, nach innen offenen Laufschienen 25 eines Sitzflächenrahmens 9 ermöglichen. Die Laufrollen 22 der ersten Scherenarme 3 sind ebenfalls für eine translatorische Relativbewegung in den Laufschienen 25 des Sitzflächenrahmens 9 sowie in den gleichartig U-förmig profilierten, nach innen offenen Laufschienen 23 des Grundrahmens 7 vorgesehen.

Zwischen den ersten und den zweiten Scherenarmen 3, 4 ist eine längenveränderliche Gasfeder 10 vorgesehen, die eine Veränderung einer Winkelstellung der Scherenarme 3, 4 ermöglicht und somit eine Einstellung der Beabstandung zwischen dem Grundrahmen 7 und dem Sitzflächenrahmen 9 ermöglicht, was in einer Höhenverstellung der Sitzfläche 5 des Fahrzeugsitzes 1 gegenüber dem an einem nicht dargestellten Fahrzeugboden befestigten Grundrahmen 7 resultiert.

Für eine gewichtsunabhängige und stoßdämpfende Aufhängung des höhenverstellbaren Fahrzeugsitzes 1 ist eine Steuereinrichtung 12 vorgesehen, die für eine Beeinflussung der Länge der Gasfeder 10 gestaltet ist und die eine an dem ersten Sitzgestellteil, also den ersten Scherenarmen 3 zugeordnete Ventileinrichtung 14 mit Steuerventilen 15, 16 sowie mit einem Entlüftungsventil 28 zur Ansteuerung von Gasströmen für die Gasfeder 10 sowie eine an dem zweiten, durch die zweiten Scherenarme 4 gebildeten Sitzgestellteil vorgesehene, als Kurvenscheibe 17 ausgeführte Steuerkulisse zur Ansteuerung der Steuerventile 15, 16 aufweist. Die Steuerventile 15, 16 und das Entlüftungsventil 28 sind an voneinander abweisenden Seitenflächen einer Trägerplatte 13 angebracht und stehen pneumatisch kommunizierend miteinander in Verbindung. Die Funktionsweise der Steuerventile 15, 16 und des Entlüftungsventils 28 wird nachstehend erläutert. Die Trägerplatte 13 ist mit einem endseitig vorgesehenen Haken für eine Einhängung in die Verbindungsstange 26 vorgesehen und weist an einem von Haken abgewandten Endbereich eine U-förmige Aufnahme auf, die für eine formschlüssige Verbindung mit der Scherenachse 11 vorgesehen ist.

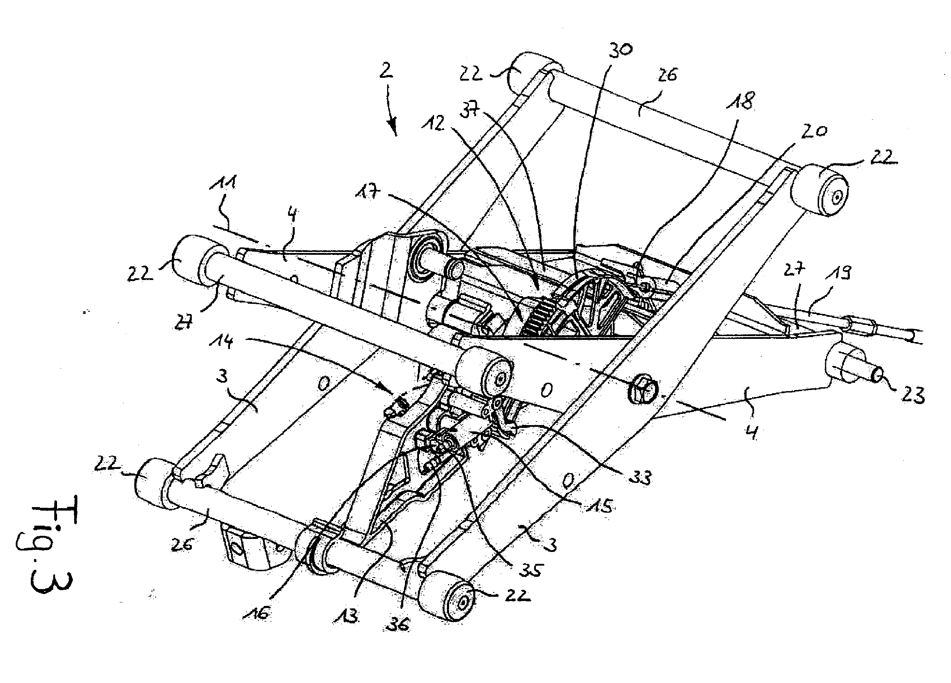

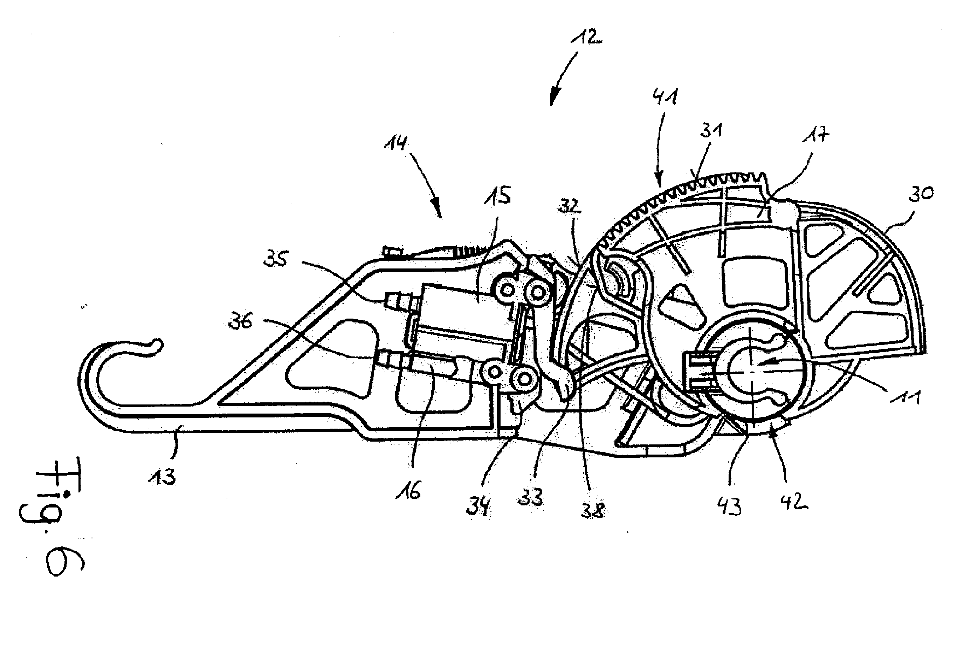

Die Kurvenscheibe 17 ist schwenkbeweglich an der Scherenachse 11 aufgenommen und mit einem als Einstellmittel ausgeführten Seilzug 18 verbunden, der mit einem nicht dargestellten Betätigungshebel gekoppelt ist und der eine Schwenkverstellung der Kurvenscheibe 17 entgegen einem von einer nicht dargestellten Torsionsfeder aufgebrachten, um die Scherenachse 11 wirkenden Rückstellmoment ermöglicht. Der Seilzug 18 ist, wie in der Fig. 3 näher dargestellt, über eine an der Kurvenscheibe 17 vorgesehene Steuerfläche 30 geführt, die eine Abwälzbewegung des Seilzugs 18 bei einer Schwenkbewegung der Kurvenscheibe 17 ermöglicht. Eine Außenhülle 19 des Seilzugs 17 ist an einem die zweiten Scherenarme 4 verbindenden Querträger 37 an einem Gegenhalter 20 abgestützt und kann somit von dem Gegenhalter 20 bis zu dem nicht dargestellten Betätigungshebel in einem frei wählbaren Verlauf angeordnet werden. Der Betätigungshebel und der Seilzug 18 sind derart auf die Kurvenscheibe 17 und die zugeordnete Torsionsfeder abgestimmt, dass eine Stellbewegung am Bestätigungshebel zu einer Schwenkbewegung der Kurvenscheibe 17 führt, wobei die Kurvenscheibe die vom Betätigungshebel vorgegebene Stellung unabhängig von einer relativen Stellung der Scherenarme 3, 4 einnehmen kann und bei einer Relativbewegung der Scherenarme 3, 4 zueinander auch einhält, ohne dass es dabei zu einer unerwünschten Verstellung der Kurvenscheibe 17 kommt. Insbesondere kann eine Voreinstellung oder Vorwahl einer Sitzhöhe, also einer Höheneinstellung des Fahrzeugsitzes auch ohne Vorliegen eines Pneumatikdrucks vorgenommen werden. Die Kurvenscheibe 17 weist eine maulförmige, in der Art eines C geformte Lagerfläche 42 auf, die auf einem abschnittsweise zylindrisch geformten Lagerbereich 43 der Trägerplatte 13 schwenkbar gelagert ist. Die Maulweite der Lagerfläche 42 entspricht im Wesentlichen dem Durchmesser der Scherenachse 11, so dass die Kurvenscheibe 17 auf die Scherenachse 11 aufgeschoben werden kann und in Wirkverbindung mit der Trägerplatte 13 formschlüssig an der Scherenachse 11 gelagert werden kann. Dabei erfolgt zunächst die Montage der Trägerplatte 13 an die Verbindungsstange 26 und die Scherenachse 11. Anschließend wird die Kurvenscheibe 17 in einer Montageposition, die abweichend von den in den Fig. 6 bis 8 dargestellten Steuerstellungen ausgerichtet ist, auf den Lagerbereich 43 aufgeschoben und anschließend in eine der Steuerstellungen verschwenkt, wodurch die gewünschte formschlüssige Verriegelung an der Scherenachse 11 verwirklicht werden kann.

Die im Wesentlichen von der Ventileinrichtung 14 und der Kurvenscheibe 17 gebildete Steuereinrichtung 12 ermöglicht eine von einer Gewichtsbelastung auf den Fahrzeugsitz 1 unabhängige Einhaltung einer vorgebbaren Höhe für den Fahrzeugsitz 1. Die der V Ventileinrichtung 14 zugeordneten Steuerventile 15, 16 sind jeweils mit Schlepphebeln 33, 34 versehen, die auf Steuerkurven 31, 32 der Kurvenscheibe 17 abgleiten können und die als Schaltventile für die Sperrung oder Freigabe eines Druckluftstroms zu der bzw. von der Gasfeder 10 vorgesehen sind, wobei beide Steuerventile ohne Betätigung durch den jeweiligen Schlepphebel 33, 34 eine Sperrstellung einnehmen, in der kein Druckluftstrom stattfindet. Das ebenfalls an der Trägerplatte 13 angebrachte, als Entlüftungsventil 28 ausgeführte Sperrventil ist vorgesehen, um eine pneumatischen Verbindung zwischen den Steuerventilen 15, 16 freizugeben oder zu sperren, wobei in der Sperrstellung durch das Entlüftungsventil 28 ein von den Steuerventilen 15, 16 unabhängiger Entlüftungskanal für ein Entweichen von Druckluft aus der Gasdruckfeder 10 vorgesehen ist. Eine Ansteuerung des Entlüftungsventils 28 erfolgt mittels eines nicht dargestellten Seilzugs, der mit einem nicht dargestellten Betätigungshebel in Wirkverbindung steht. An dem Entlüftungsventil 28 ist eine der vom Seilzug ausgeübten Zugkraft entgegengerichtete Zugfeder 29 zugeordnet, die bei geringen Zugkräften das Entlüftungsventil 28 in einer Öffnungsstellung hält. An dem Entlüftungsventil 28 ist ein Anschlussstutzen 40 zur Ankopplung eines nicht dargestellten, mit der Gasfeder verbundenen Druckluftschlauchs vorgesehen.

Das erste Steuerventil 15 ist an einem Anschlussstutzen 35 über einen nicht dargestellten Druckluftschlauch mit einer nicht dargestellten Druckluftquelle gekoppelt und kann somit eine Druckluftzufuhr zur Gasfeder 10 freigegeben. Dabei führt eine von der Kurvenscheibe 17 bewirkte Auslenkung des Schlepphebels 33 zu einem Öffnen des ersten Steuerventils 15. Dadurch kann Druckluft in die Gasfeder 10 einströmen und erhöht den dort herrschenden Innendruck, um eine Längenausdehnung der Gasfeder 10 herbeizuführen, durch die eine Bewegung des Sitzflächenrahmens 9 in vertikaler Richtung nach oben vollzogen werden kann. Das zweite Steuerventil 16 weist einen Abluftstutzen 36 auf, an dem ein nicht dargestellter Druckschlauch angebracht ist, der an einem dem Steuerventil 16 abgewandten Ende eine nicht dargestellte Druckluftdrossel aufweist. Durch Öffnen des zweiten Steuerventils 16 kann die Druckluft aus der Gasfeder 10 entweichen, wobei durch die Drossel eine Begrenzung einer Druckveränderung für den Innendruck der Gasfeder 10 und damit eine Begrenzung einer Absenkgeschwindigkeit für den Sitzflächenrahmen 9 in vertikaler Richtung nach unten verwirklicht werden kann.

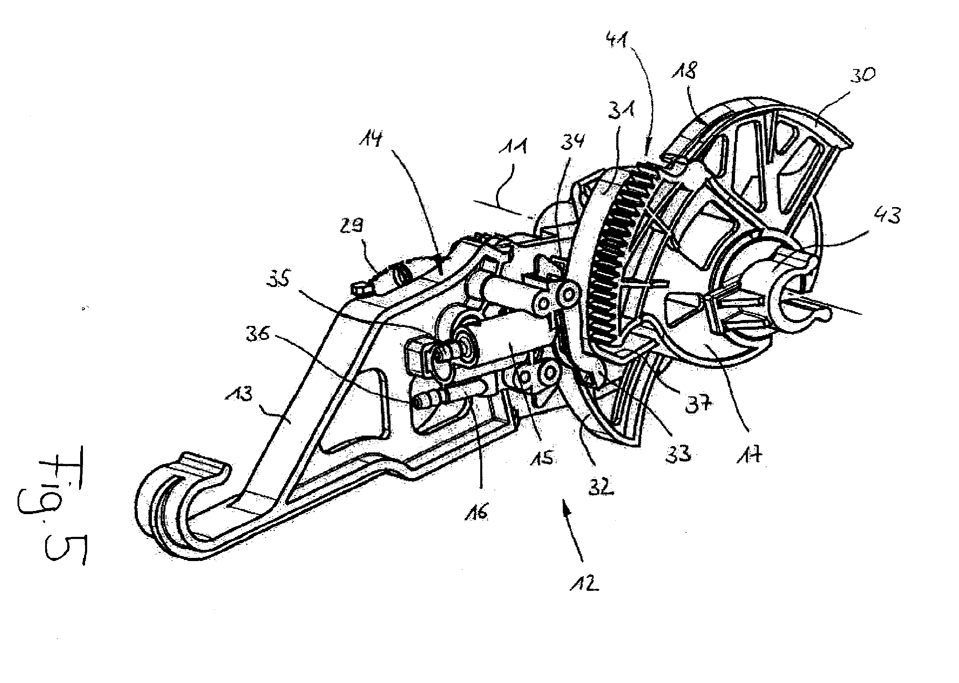

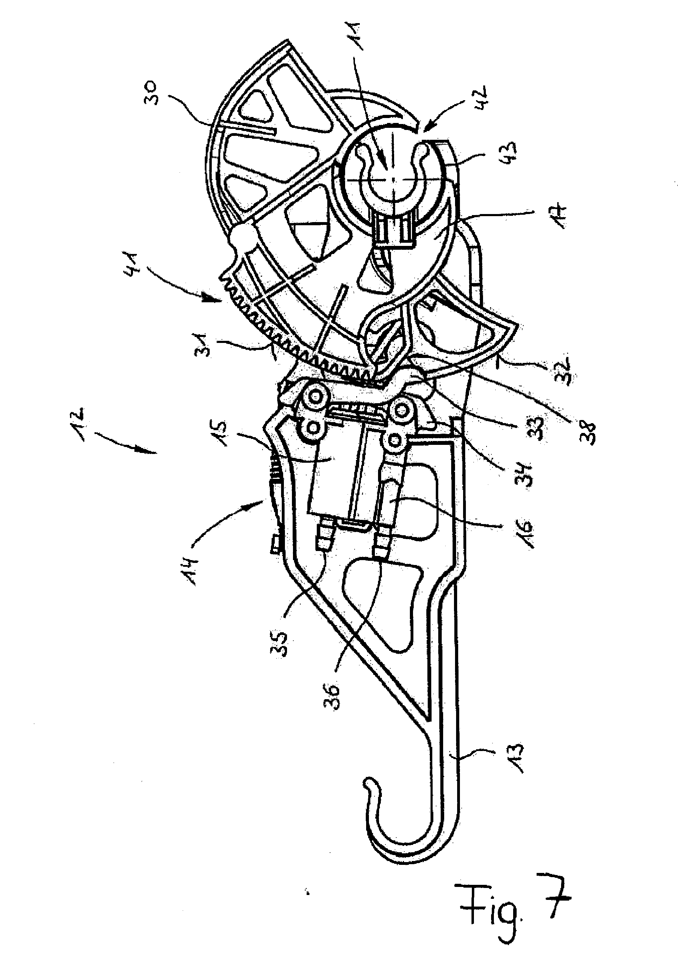

Die parallel nebeneinander angeordneten, umlaufenden Steuerkurven 31, 32 der Kurvenscheibe 17 sind hinsichtlich ihres über den Umfang der Kurvescheibe 17 veränderlichen Radius derart gestaltet, dass in einer in den Fig. 5 und 7 dargestellten zweiten Steuerstellung, einer Neutralstellung, beide Steuerventile 15, 16 geschlossen sind und keine Druckveränderung in der Gasfeder 10 vorgenommen wird. Sobald es durch eine Betätigung des Seilzugs 18 oder durch eine Veränderung des auf den Fahrzeugsitz 1 einwirkenden Gewichts zu einer Relativbewegung zwischen der Kurvenscheibe 17 und der Ventileinrichtung 14 kommt, gleiten die Schlepphebel 33, 34 auf den Steuerkurven 31, 32 ab. Dabei kommt es abhängig von der Richtung der Relativbewegung der Kurvenscheibe 17 zu einer Auslenkung eines der Schlepphebel 33, 34 und zur Ansteuerung des entsprechenden Steuerventils 15, 16. Die Ansteuerung des jeweiligen Schlepphebels 33, 34 wird durch einen Radiussprung der jeweiligen Steuerkurve 31, 32 bewirkt, der in der Art einer Schrägfläche 38, 39 an den Steuerkurven 31, 32 verwirklicht ist und der ein reibungsarmes Abgleiten der Schlepphebel 33, 34 ermöglicht. Die Steuerkurven 31, 32 und die gegenläufig schwenkbar an den Steuerventilen 15, 16 angebrachten Schlepphebel 33, 34 sind derart aufeinander abgestimmt, dass in der Neutralstellung gemäß den Fig. 5 und 7 eine Schwenkbewegung mit einem Schwenkwinkel kleiner als 5 Grad stattfinden kann, innerhalb dessen keine Aktivierung eines der beiden Steuerventile 15, 16 erfolgt. Durch die versetzte Anordnung der Steuerventile 15, 16 und die gegenläufige Anordnung der Schlepphebel 33, 34 kann eine besonders kompakte Anordnung der Ventileinrichtung und eine ebenso kompakte Gestaltung der Kurvenscheibe 17 bewirkt werden.

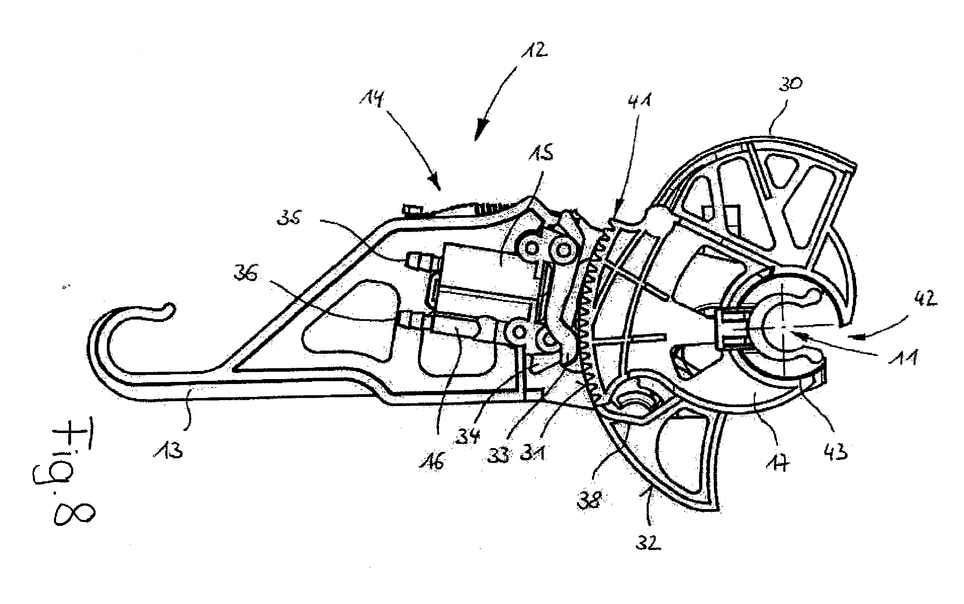

Der höhenverstellbare Fahrzeugsitz 1 verwirklicht mit der vorstehend beschriebenen Steuereinrichtung 12 eine selbsttätige und gewichtsunabhängige Höheneinstellung. Die Steuereinrichtung 12 ist derart ausgelegt, dass die Gasfeder 10 jederzeit derart angesteuert wird, dass die in den Fig. 5 und 7 dargestellte Neutralstellung für die Steuerventile 15, 16 gewährleistet ist. Wird von außen über den Betätigungshebel, der auf den Seilzug 18 einwirkt, eine Schwenkbewegung auf die Kurvenscheibe 17 gegenüber der Ventileinrichtung 14 und gegenüber dem zweiten Sitzgestellteil eingeleitet, um eine Höhenveränderung des Fahrzeugsitzes zu erwirken, kommt es bedingt durch die Relativbewegung der Kurvenscheibe 17 zu einer Auslenkung eines der beiden Schlepphebel 33, 34. Wird die Kurvenscheibe 17 derart verschwenkt, dass eine Vergrößerung der Sitzhöhe des Fahrzeugsitzes 1 angestrebt wird, wie dies in der Fig. 8 dargestellt ist, so kommt es bedingt durch den Verlauf der Steuerkurve 31 für das erste Steuerventil 15 zu einer Betätigung des Schlepphebels 33, wodurch das erste Steuerventil 15 öffnet und Druckluft von der Druckluftquelle in die Gasfeder 10 passieren lässt, die solange eine Längenänderung und eine dadurch bewirkte Höhenverstellung nach oben für den Fahrzeugsitz 1 bewirkt, bis die beiden Scherenarme 3, 4 soweit verschwenkt sind, dass die Kurvenscheibe 17 gegenüber der Ventileinrichtung 14 in der Neutrallage ist. Bei einer entgegengesetzt gerichteten Schwenkbewegung der Kurvenscheibe, wie sie in der Fig. 6 dargestellt ist, wird der Schlepphebel 34 ausgelenkt und öffnet das zweite Steuerventil 16, so dass Druckluft über die dem Steuerventil 16 zugeordnete, nicht dargestellte Drossel aus der Gasfeder 10 entweichen kann, bis sich die Kurvenscheibe 17 und die Ventileinrichtung 14 wieder in der Neutrallage gemäß der Fig. 5 und 7 befinden, in der kein Druckluftstrom in die Gasdruckfeder 10 stattfindet. Eine identische Situation ergibt sich, wenn der Fahrzeugsitz 1 entlastet wird, also der Benutzer beispielsweise den Fahrzeugsitz 1 verlässt, um aus dem Fahrzeug auszusteigen. Dann kommt es durch den in der Gasfeder 10 vorliegenden Innendruck zu einer Relativbewegung der Scherenarme 3, 4, wodurch die Kurvenscheibe 17 relativ zu der Ventileinrichtung 14 bewegt wird und das zweite Steuerventil 16 angesteuert wird, um Druckluft aus der Gasfeder 10 entweichen zu lassen und somit eine Absenkung des Fahrzeugsitzes 1 auf die von der Kurvenscheibe 17 vorgegebene Sitzhöhe durchzuführen. Wird die Belastung auf den Fahrzeugsitz 1 erhöht, sinkt die Gasfeder 10 zunächst zusammen, wodurch das erste Steuerventil 15 durch die Relativbewegung der Scherenarme 3, 4 und der Kurvenscheibe 17 angesteuert wird und eine Druckerhöhung des Innendrucks der Gasfeder 10 bewirken kann, bis die Neutralstellung eingenommen wird.

Die vorstehend beschriebenen Regelungsvorgänge setzen voraus, dass sich das Entlüftungsventil 28 in der Öffnungsstellung befindet. Nur in der Öffnungsstellung liegt eine kommunizierende pneumatische Verbindung zwischen der Gasfeder 10 und den Steuerventilen 15, 16 vor. Das Entlüftungsventil 28 kann auch in eine Sperrstellung gebracht werden, in der kein Gasstrom zu der oder von der Gasfeder 10 stattfinden kann. In dieser Sperrstellung wird eine Niveauregulierung unterbunden, der Fahrzeugsitz 1 wird lediglich durch das in der Gasfeder 10 eingeschlossene Gaspolster gefedert. Eine Gewichtsanpassung findet in der Sperrstellung ebenfalls nicht statt. Das Entlüftungsventil 28 kann zudem eine Entlüftungsstellung einnehmen, in der der Innendruck aus der Gasfeder 10 unmittelbar und ungedrosselt in die Umgebung entweichen kann, ohne mit den Steuerventilen 15, 16 in Berührung zu kommen. In der Entlüftungsstellung ist die kommunizierende pneumatische Verbindung zwischen den Steuerventilen 15, 16 und der Gasfeder 10 unterbrochen, vielmehr öffnet das Entlüftungsventil 28 einen eigenen Entlüftungskanal, der ein Abströmen des Innendrucks ermöglicht. Damit kann der Fahrzeugsitz 1 rasch abgesenkt werden, um beispielsweise ein Ein- oder Aussteigen des Benutzers zu erleichtern. Sobald der Benutzer auf dem Fahrzeugsitz Platz genommen hat, kann er durch Betätigung des mit dem Entlüftungsventil 28 verbundenen Betätigungshebels die direkte Entlüftung der Gasfeder 10 beenden und die pneumatisch kommunizierende Verbindung der Gasfeder 10 zu den Steuerventilen 15, 16 wieder herstellen. Dadurch kann Druckluft in die Gasfeder 10 strömen, bis die Ventileinrichtung 14 die Neutralstellung gegenüber der einstellbaren Kurvenscheibe 17 eingenommen hat.
Wie in den Fig. 3 bis 8 dargestellt, weist die Kurvenscheibe 17 eine stirnseitige Verzahnung auf, die für eine kämmende Wirkverbindung mit einem nicht näher dargestellten Zahnrad vorgesehen ist. Das Zahnrad ist drehbeweglich an einem Lagerzapfen aufgenommen, der an dem zweiten Scherenarm 4 angebracht ist. Mit dem Zahnrad ist ein exzentrisch zu einer Rotationsachse des Zahnrads ebenfalls drehbeweglich auf dem Lagerzapfen aufgenommener Höhenanschlag verbunden, der in Abhängigkeit von der Schwenkposition der Kurvenscheibe 17 gegenüber dem zweiten Schwenkarm eine Ausschlagbegrenzung für eine gewichtsabhängige Niveauausgleichsbewegung des Fahrzeugsitzes 1 verwirklichen kann. Damit ist es möglich, einen Ausschlagbereich für den Fahrzeugsitz 1 in Abhängigkeit von der gewählten Höheneinstellung zu begrenzen, um insbesondere bei hohen Sitzpositionen ein zu heftiges Schwingen des Fahrzeugsitzes 1 zu verhindern.

### Bezugszeichenliste

- 1: Fahrzeugsitz
- 2: Scherengestell (Sitzgestell)
- 3: erster Scherenarm (erstes Sitzgestellteil)
- 4: zweiter Scherenarm (zweites Sitzgestellteil)
- 5: Sitzfläche
- 6: Rückenlehne
- 7: Grundrahmen
- 8: Gleitschiene
- 9: Sitzflächenrahmen
- 10: Gasfeder
- 11: Scherenachse
- 12: Steuereinrichtung
- 13: Trägerplatte
- 14: Ventileinrichtung
- 15: erstes Steuerventil
- 16: zweites Steuerventil
- 17: Kurvenscheibe (Steuerkulisse)
- 18: Seilzug
- 19: Außenhülle (Seilzug)
- 20: Gegenhalter (Seilzug)
- 21: Schwenkachse
- 22: Laufrollen
- 23: Scharnierzapfen
- 24: Laufschiene (Grundrahmen)
- 25: Laufschiene (Sitzrahmen)
- 26: Verbindungsstange (erste Scherenarme)
- 27: Verbindungsstange (zweite Scherenarme)
- 28: Entlüftungsventil (Sperrventil)
- 29: Zugfeder (Sperrventil)
- 30: Steuerfläche (Seilzug)
- 31: Steuerkurve (erstes Steuerventil)
- 32: Steuerkurve (zweites Steuerventil)
- 33: Schlepphebel (erstes Steuerventil)
- 34: Schlepphebel (zweites Steuerventil)
- 35: Anschlussstutzen (erstes Steuerventil)
- 36: Abluftstutzen (zweites Steuerventil)
- 37: Querträger (zweite Scherenarme)
- 38: Schrägfläche (erste Steuerkurve)
- 39: Schrägfläche (zweite Steuerkurve)
- 40: Anschlussstutzen (Entlüftungsventil)
- 41: Verzahnung
- 42: Lagerfläche (Kurvenscheibe)
- 43: Lagerbereich (Trägerplatte)

## Patentansprüche

1. Fahrzeugsitz (1) mit einem höhenverstellbaren Sitzgestell (2), das zumindest zwei relativ zueinander bewegliche Sitzgestellteile (3, 4) und zumindest eine zwischen den Sitzgestellteilen (3, 4) zur Höhenverstellung angeordnete Gasfeder (10) aufweist, mit zumindest einer zur Beeinflussung der Gasfeder (10) vorgesehenen Steuereinrichtung (12), die zumindest eine an einem ersten Sitzgestellteil (3) angebrachte Ventileinrichtung (14) mit Steuerventilen (15, 16) zur Ansteuerung von Gasströmen für die Gasfeder (10) sowie eine an einem zweiten Sitzgestellteil (4) vorgesehene Steuerkulisse (17) zur Ansteuerung der Steuerventile (15, 16) aufweist, so dass unabhängig von einer Gewichtsbelastung auf den Fahrzeugsitz (1) eine vorgebbare Höhe des Fahrzeugsitzes (1) gewährleistet ist,
wobei
die Steuerkulisse (17) mittels einer Einstelleinrichtung (18) unabhängig von einer relativen Stellung der Sitzgestellteile (3, 4) derart relativbeweglich zum zweiten Sitzgestellteil (4) einstellbar ist, dass eine von der Einstelleinrichtung (18) bewirkte Bewegung der Steuerkulisse (17) relativ zum zweiten Sitzgestellteil (4) eine Höhenverstellung des Fahrzeugsitzes (1) bewirkt,
**dadurch gekennzeichnet, dass**
die Einstelleinrichtung (18) einen Seilzug aufweist,
und die Steuerkulisse (17) zumindest eine zumindest abschnittsweise umlaufende Abwälzfläche (30) für den Seilzug aufweist.

2. Fahrzeugsitz nach Anspruch 1,
**dadurch gekennzeichnet, dass**
die Steuerkulisse (17) mit einer Energiespeichereinrichtung, insbesondere einer Torsionsfeder, gegen eine Betätigungskraft der Einstelleinrichtung (18) vorgespannt ist.

3. Fahrzeugsitz nach **Anspruch** 1,
**dadurch gekennzeichnet, dass**
die Steuerkulisse (17) drehbar an dem zweiten Sitzgestellteil (4) angelenkt ist und zumindest abschnittsweise als Kurvenscheibe mit zumindest zwei parallel umlaufend angeordneten Steuerbahnen (31, 32) ausgeführt ist und die Ventileinrichtung (14) zwei, insbesondere mit Schlepphebeln (33, 34) versehene, Steuerventile (15, 16) aufweist, die von den parallel umlaufenden Steuerbahnen (31, 32) ansteuerbar sind.

4. Fahrzeugsitz nach Anspruch 1,
**dadurch gekennzeichnet, dass**
die Steuerkulisse (17) drehbar an dem zweiten Sitzgestellteil (4) angelenkt ist und zumindest abschnittsweise als Kurvenscheibe mit zumindest zwei, vorzugsweise parallel umlaufend angeordneten Steuerbahnen (31, 32) ausgeführt ist, die als bogenförmige Umfangsabschnitte mit abschnittsweise unterschiedlichen Radien ausgeführt sind.

5. Fahrzeugsitz nach Anspruch 1,
**dadurch gekennzeichnet, dass** die Steuerkulisse (17) drehbar an dem zweiten Sitzgestellteil (4) angelenkt ist und zumindest abschnittsweise als Kurvenscheibe mit zumindest zwei, vorzugsweise parallel umlaufend angeordneten Steuerbahnen (31, 32) ausgeführt ist, die zumindest abschnittsweise einen im Wesentlichen gleichen Radius aufweisen.

6. Fahrzeugsitz nach Anspruch 1,
**dadurch gekennzeichnet, dass**
die Steuerkulisse (17) drehbar auf einer Mittelachse eines Scherengestells (2) angeordnet ist.

7. Fahrzeugsitz nach Anspruch 6,
**dadurch gekennzeichnet, dass**
die Steuerkulisse (17) zumindest abschnittsweise als Kurvenscheibe mit zumindest zwei umlaufend angeordneten Steuerbahnen (31, 32) ausgeführt ist.

8. Fahrzeugsitz nach Anspruch 1,
**dadurch gekennzeichnet, dass**
der Ventileinrichtung (14) ein Sperrventil (28) zur Freigabe oder Sperrung einer kommunizierenden Verbindung zwischen der Gasfeder (10) und den Steuerventilen (15, 16) zugeordnet ist.

9. Fahrzeugsitz nach Anspruch 8,
**dadurch gekennzeichnet,dass**
das Sperrventil (28) eine zusätzliche Entlüftungsstellung für eine rasche Entlüftung der Gasfeder (10) aufweist, die für eine schnelle Absenkung des Fahrzeugsitzes (10) vorgesehen ist.

10. Fahrzeugsitz nach Anspruch 6,
**dadurch gekennzeichnet, dass**
die Steuerkulisse (17) für eine Ansteuerung eines einstellbaren Bewegungsanschlags gestaltet ist, der für eine Begrenzung einer Schwingungsamplitude des Fahrzeugsitzes (1), insbesondere in Wirkverbindung mit zumindest einem der Scherenarme (3, 4), vorgesehen ist.

## Claims

1. Vehicle seat (1) with a height-adjustable seat frame (2) having at least two seat frame parts (3, 4) which can be moved relative to one another and at least one gas spring (10) arranged between the seat frame parts (3, 4) for height adjustment purposes,
at least one control device (12) for acting upon the gas spring (10), which control device comprises at least one valve device (14) attached to a first seat frame part (3) and having control valves (15, 16) for controlling gas flows for the gas spring (10), and a control link (17) provided on a second seat frame part (4) for actuating the control valves (15, 16), so that a predefinable height of the vehicle seat (1) is ensured regardless of a weight load on the vehicle seat (1), the control link (17) being adjustable by relative movement with respect to the second seat frame part (4), independently of a relative position of the seat frame parts (3, 4), by means of an adjustment device (18) such that a movement of the control link (17) relative to the second seat frame part (4) caused by the adjustment device (18) causes a height adjustment of the vehicle seat (1), **characterised in that** the adjustment device (18) comprises a cable and the control link (17) comprises at least one roll-off surface (30) for the cable, said surface surrounding said link at least in some portions.

2. Vehicle seat according to claim 1, **characterised in that** the control link (17) is pretensioned by an energy-storing means, in particular a torsion spring, against an actuating force of the adjustment device (18).

3. Vehicle seat according to claim 1, **characterised in that** the control link (17) is rotatably articulated on the second seat frame part (4) and is formed at least in some portions as a cam disc comprising at least two control paths (31, 32) arranged in parallel around the circumference thereof and the valve device (14) comprises two control valves (15, 16), in particular provided with drag levers (33, 34), which can be controlled by the control paths (31, 32) that are in parallel around the circumference.

4. Vehicle seat according to claim 1, **characterised in that** the control link (17) is rotatably articulated on the second seat frame part (4) and is formed at least in some portions as a cam disc comprising at least two control paths (31, 32) which are preferably arranged in parallel around the circumference thereof and are in the form of curved circumference portions having different radii in some portions.

5. Vehicle seat according to claim 1, **characterised in that** the control link (17) is rotatably articulated on the second seat frame part (4) and is formed at least in some portions as a cam disc comprising at least two control paths (31, 32) which are preferably arranged in parallel around the circumference thereof and have substantially the same radius at least in some portions.

6. Vehicle seat according to claim 1, **characterised in that** the control link (17) is rotatably arranged on a centre shaft of a scissors-type frame (2).

7. Vehicle seat according to claim 6, **characterised in that** the control link (17) is formed at least in some portions as a cam disc comprising at least two control paths (31, 32) arranged around the circumference thereof.

8. Vehicle seat according to claim 1, **characterised in that** the valve device (14) is assigned a stop valve (28) for allowing or blocking a communicating connection between the gas spring (10) and the control valves (15, 16).

9. Vehicle seat according to claim 8, **characterised in that** the stop valve (28) has an additional venting position for rapid venting of the gas spring (10), which is provided for rapidly lowering the vehicle seat (10).

10. Vehicle seat according to claim 6, **characterised in that** the control link (17) is designed to actuate an adjustable movement stop, which is provided for limiting a vibration amplitude of the vehicle seat (1) and is in particular operatively connected to at least one of the scissor arms (3, 4).

## Revendications

1. Siège de véhicule (1) avec un châssis d'assise (2) réglable en hauteur qui comprend au moins deux parties de châssis d'assise (3, 4) mobiles l'une par rapport à l'autre et au moins un ressort à gaz (10) disposé entre les parties du châssis d'assise (3, 4) pour le réglage en hauteur, avec au moins un dispositif de commande (12) conçu pour commander le ressort à gaz (10), qui comprend au moins un dispositif à soupapes (14), disposé sur une première partie de châssis d'assise (3) et doté de soupapes de commande (15, 16), pour la commande d'écoulements de gaz pour le ressort à gaz (10), ainsi qu'un coulisseau de commande (17), disposé sur une deuxième partie de châssis d'assise (4), pour la commande des soupapes de commande (15, 16), de façon à ce que, quelle que soit la charge sur le siège de véhicule (1), une hauteur pré-réglable du siège de véhicule (1) soit garantie,
le coulisseau de commande (17) étant réglable à l'aide d'un dispositif de réglage (18), indépendamment d'une position relative des parties du châssis d'assise (3, 4), avec un mouvement relatif par rapport à la deuxième partie du châssis d'assise (4), de telle sorte qu'un mouvement du coulisseau de commande (17) par rapport à la deuxième partie de châssis d'assise (4), provoqué par le dispositif de réglage (18), provoque un réglage en hauteur du siège de véhicule (1),
**caractérisé en ce que** le dispositif de réglage (18) comprend un câble de traction et le coulisseau de commande (17) comprend au moins une surface de roulement (30) au moins partiellement circulaire pour le câble de traction.

2. Siège de véhicule selon la revendication 1, **caractérisé en ce que** le coulisseau de commande (17) est précontraint à l'aide d'un dispositif d'accumulation d'énergie, plus particulièrement un ressort de torsion, à l'encontre d'une force d'actionnement du dispositif de réglage (18).

3. Siège de véhicule selon la revendication 1, **caractérisé en ce que** le coulisseau de commande (17) est articulé de manière rotative avec la deuxième partie du châssis d'assise (4) et est conçu, au moins partiellement, comme un disque à cames avec au moins deux pistes de commande (31, 32) disposées parallèlement sur la périphérie et
le dispositif à vannes (14) comprend deux soupapes de commande (15, 16), plus particulièrement équipées de leviers à galets (33, 34), qui peuvent être commandées par les pistes de commande (31, 32) disposées parallèlement sur la périphérie.

4. Siège de véhicule selon la revendication 1, **caractérisé en ce que** le coulisseau de commande (17) est articulé de manière rotative avec la deuxième partie du châssis d'assise (4) et est conçu, au moins partiellement, comme un disque à cames avec au moins deux pistes de commande (31, 32), disposées de préférence parallèlement sur la périphérie, qui sont conçues comme des sections circulaires avec des rayons différents selon les sections.

5. Siège de véhicule selon la revendication 1, **caractérisé en ce que** le coulisseau de commande (17) est articulé de manière rotative avec la deuxième partie du châssis d'assise (4) et est conçu, au moins partiellement, comme un disque à cames avec au moins deux pistes de commande (31, 32), disposées de préférence parallèlement sur la périphérie, qui présentent sensiblement les mêmes rayons, du moins selon les sections.

6. Siège de véhicule selon la revendication 1, **caractérisé en ce que** le coulisseau de commande (17) est disposé de manière rotative sur un axe centrale d'un châssis à ciseaux (2).

7. Siège de véhicule selon la revendication 6, **caractérisé en ce que** le coulisseau de commande (17) est conçu au moins partiellement comme un disque à cames avec au moins deux pistes de commande (31, 32) disposés sur la périphérie.

8. Siège de véhicule selon la revendication 1, **caractérisé en ce que** le dispositif à soupapes (14) comprend une soupape d'arrêt (28) pour la libération ou le blocage d'une liaison de communication entre le ressort à gaz (10) et les soupapes de commande (15, 16).

9. Siège de véhicule selon la revendication 8, **caractérisé en ce que** la soupape d'arrêt (28) présente une position de ventilation supplémentaire pour une ventilation rapide du ressort à gaz (10), qui est prévu pour un abaissement rapide du siège de véhicule (1).

10. Siège de véhicule selon la revendication 6, **caractérisé en ce que** le coulisseau de commande (17) est conçu pour une commande d'une butée de mouvement réglable prévue pour limiter l'amplitude de vibration du siège de véhicule (1), plus particulièrement en liaison fonctionnelle avec au moins un des bras des ciseaux (3, 4).
